# EUROPÄISCHE PATENTANMELDUNG

(11) **EP 4 177 441 A1**
(43) Veröffentlichungstag der Anmeldung: **10.05.2023**
(21) Anmeldenummer: 21206455.4
(22) Anmeldetag: 04.11.2021
(51) Int. Cl.: F01D 11/02, F16C 33/80, F16J 15/447

(54) **WARTUNGSARME DICHTUNGSANORDNUNG FÜR EIN VERTIKAL AUSGERICHTETES INDUSTRIEGETRIEBE**

(71) Anmelder: Flender GmbH, 46395 Bocholt (DE)
(72) Erfinder: BRUNS, Christoph, 46499 Hamminkeln (DE); KLEIN-HITPASS, Michael, 46483 Wesel (DE); TEGELKAMP, Michael, 46399 Bocholt (DE); JOSTEN, Guido, 46395 Bocholt (DE)
(74) Vertreter: Michalski Hüttermann & Partner Patentanwälte mbB

(57) **Zusammenfassung**

Es ist eine Dichtungsanordnung (42) für ein Industriegetriebe (10) vorgesehen, mit einer vertikal ausgerichteten unteren Leistungswelle (16) zum Drehmomentaustausch mit dem Industriegetriebe (10), einer radial außerhalb zu der Leistungswelle (16) vorgesehenen Getriebekomponente (40) des Industriegetriebes (10), wobei die Leistungswelle (16) im bestimmungsgemäßen Betrieb eine größere Drehzahl als die Getriebekomponente (40) aufweist, wobei zwischen der Getriebekomponente (40) und der Leistungswelle (16) eine berührungslose erste Dichtung (44) vorgesehen ist, wobei die erste Dichtung (44) einen zur Schwerkraftrichtung (14) angeschrägten und entgegen der Schwerkraftrichtung (14) von radial außen nach radial innen verlaufenden konischen ersten Dichtspalt (56) aufweist. Selbst wenn Schmiermittel entgegen der Schwerkraft (14) in den ersten Dichtspalt (56) der ersten Dichtung (44) gelangt, kann die einfache aber effektive Formgestaltung des ersten Dichtspalts (56) das Schmiermittel ohne Verschleißeffekte zurück nach unten fördern, so dass mit Hilfe der Dichtungsanordnung (42) eine wartungsarmes und kostengünstiges Industriegetriebe (10) ermöglicht ist.

## Beschreibung

Die Erfindung betrifft eine Dichtungsanordnung für ein vertikal ausgerichtetes Industriegetriebe, das besonders wartungsarm ist, sowie ein derartiges Industriegetriebe und ein Datenagglomerat zur virtuellen Abbildung derartiger Gegenstände.

Aus DE 10 2013 212 464 A1 ist ein Zwei-Planetenradstufen aufweisendes Industriegetriebe zum Antrieb einer Vertikalmühle bekannt, bei dem die Planetenradstufen vertikal ausgerichtete Wellen und feststehende Hohlräder aufweisen. Die relativ zueinander bewegbaren Getriebekomponente der Planetenradstufen sind mit Schmieröl geschmiert und über eine Dichtungsanordnung zur Umgebung hin abgedichtet.

Es besteht ein ständiges Bedürfnis Industriegetriebe wartungsarm und verschleißarm auszugestalten, um kostenintensive Stillstandzeiten zu minimieren.

Es ist die Aufgabe der Erfindung Maßnahmen aufzuzeigen, die ein wartungsarmes Industriegetriebe ermöglichen.

Die Lösung der Aufgabe erfolgt durch eine Dichtungsanordnung mit den Merkmalen des Anspruchs 1, ein Industriegetriebe mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Dichtungsanordnung für ein Industriegetriebe, mit einer vertikal ausgerichteten unteren Leistungswelle zum Drehmomentaustausch mit dem Industriegetriebe, einer radial außerhalb zu der Leistungswelle vorgesehenen Getriebekomponente des Industriegetriebes, wobei die Leistungswelle im bestimmungsgemäßen Betrieb eine größere Drehzahl als die Getriebekomponente aufweist, wobei zwischen der Getriebekomponente und der Leistungswelle eine berührungslose erste Dichtung vorgesehen ist, wobei die erste Dichtung einen zur Schwerkraftrichtung angeschrägten und entgegen der Schwerkraftrichtung von radial außen nach radial innen verlaufenden konischen ersten Dichtspalt aufweist.

Eine Leckage von Schmiermittel, insbesondere Schmieröl, kann insbesondere zwischen relativ zueinander rotierenden Bauteilen des Industriegetriebes auftreten. Um dies zu verhindern, können berührende Dichtungen wie beispielsweise ein Radialwellendichtring oder eine Filzdichtung vorgesehen werden. Berührende Dichtungen verschleißen jedoch und müssen regelmäßig gewartet und ausgetauscht werden. Dies ist insbesondere bei Industriegetrieben problematisch, da dort hohe Relativgeschwindigkeiten, hohe Kräfte und hohe Temperaturen auftreten können, die zu Verformungen der Bauteile und einen erhöhten Verschleiß der berührenden Dichtungen führen. Zudem ist in staubintensiven Anwendungen, wie beispielsweise bei einer zum Zerkleinern von Feststoffen vorgesehenen Mühle häufig eine staubfeste Abkapselung vorgesehen, so dass die Zugänglichkeit von Verschleißteilen grundsätzlich schwierig ist und eine zeitintensive Wartung erfordert. Die Verwendung von berührungslosen Dichtungen, die auch bei den in einem Industriegetrieben auftretenden Relativgeschwindigkeiten und Temperaturen einen Kontakt der relativ zueinander drehenden Bauteile vermeidet, weisen aufgrund des verbleibenden relativ großen Dichtspalts eine geringe Dichtwirkung aus.

Bei der Erfindung wird die Erkenntnis ausgenutzt, dass bei einem vertikal ausgerichteten Industriegetriebe, bei dem beispielsweise eine Leistungswelle ein Antriebsdrehmoment von unten nach oben in das Innere eines Getriebegehäuses des Industriegetriebes einleiten oder ein Abtriebsdrehmoment von oben nach unten aus dem Inneren des Getriebegehäuses des Industriegetriebes ausleiten kann, Schwerkrafteffekte und/oder Fliehkrafteffekte für die Verbesserung der Dichtwirkung einer berührungslosen Dichtung ausgenutzt werden können.

Wenn das im vertikal ausgerichteten Industriegetriebe vorgesehene Schmiermittel die Dichtungsanordnung passieren sollte, müsste das Schmiermittel entlang des ersten Dichtspalts der berührungslosen ersten Dichtung entgegen der Schwerkraftrichtung bewegt werden. Die Dichtwirkung der ersten Dichtung kann dadurch leicht über eine entsprechende große Erstreckung in vertikaler Richtung ausreichend hoch eingestellt werden. Bei einer im Vergleich zu einer Labyrinthdichtung sehr einfachen und kostengünstig herstellbaren konstruktiven Ausgestaltung der ersten Dichtung lässt sich eine hohe Dichtwirkung erreichen. Der erste Dichtspalt kann durch zwei aufeinander zu weisenden Kegelflächen begrenzt sein, die einfach zu fertigen sind. Die Kegelflächen können insbesondere im Wesentlichen parallel zueinander oder zueinander leicht angeschrägt verlaufen. Der Abstand der Kegelflächen kann insbesondere derart gewählt sein, dass ein ansaugender Kapillareffekt vermieden oder gering gehalten ist und/oder ein Passieren des ersten Dichtspalts durch hochspritzendes Schmiermittel blockiert oder gering gehalten ist. Der Dichtspalt zwischen den Kegelflächen kann einen im Wesentlichen konstanten Strömungsquerschnitt oder einen entgegen der Schwerkraftrichtung sich verjüngenden oder erweiternden Strömungsquerschnitt aufweisen.

Zudem kann im bestimmungsgemäßen Betrieb, wenn die Leistungswelle rotiert, eine Relativdrehung zwischen der radial inneren und der radial äußeren Begrenzung des ersten Dichtspalts auftreten. Das in den ersten Dichtspalt eindringende Schmiermittel kann von der radial inneren und/oder der radial äußeren Begrenzung des ersten Dichtspalts aufgrund von Reibungseffekten mitgenommen und über die Umfangsfläche verteilt werden, wodurch das Schmiermittel an der zugeordneten Begrenzung schwerkraftgetrieben zurückfließen kann. Zudem kann das Schmiermittel infolge des rotatorischen Bewegungsanteils fliehkraftgetrieben nach radial außen gedrückt werden und an der von der radial äußeren Begrenzung des ersten Dichtspalts ausgebildeten schiefen Ebene nach unten gedrückt werden. Zusätzlich zu der sowieso an dem Schmiermittel angreifenden Schwerkraft kann ein entlang der schiefen Ebene der radial äußeren Begrenzung des ersten Dichtspalts gerichteter Anteil der an dem Schmiermittel angreifenden Fliehkraft das Schmiermittel in Schwerkraftrichtung aus den ersten Dichtspalt nach unten befördern. Selbst wenn Schmiermittel entgegen der Schwerkraft in den ersten Dichtspalt der ersten Dichtung gelangt, kann die einfache aber effektive Formgestaltung des ersten Dichtspalts das Schmiermittel ohne Verschleißeffekte zurück nach unten fördern, so dass mit Hilfe der Dichtungsanordnung eine wartungsarmes und kostengünstiges Industriegetriebe ermöglicht ist.

Die Leistungswelle kann durch eine, insbesondere von einem Getriebegehäuse bereitgestellte, Außenhülle des Industriegetriebes am unteren Ende der Außenhülle ein Drehmoment übertragen. Die Leistungswelle kann insbesondere ein in dem Industriegetriebe gewandeltes Drehmoment als Abtriebswelle aus dem Industriegetriebe ausleiten und beispielsweise eine Mühlenwelle einer Vertikalmühle antreiben. Es ist aber auch möglich, dass die Leistungswelle mit einem Antriebsmotor verbunden sein kann und als Antriebswelle ein Drehmoment in des Industriegetriebe einleitet. Die Leistungswelle des Industriegetriebes kann insbesondere eine mit einem Sonnenrad eines Planetengetriebes verbundene Sonnenwelle oder eine mit einem Planetenträger des Planetengetriebes verbundene Platenträgerwelle sein. Die Leistungswelle kann als Vollwelle oder Hohlwelle ausgestaltet sein. Die Leistungswelle selbst oder ein mit der Leistungswelle verbundenes Bauteil kann insbesondere eine Begrenzung des ersten Dichtspalts ausbilden. Die Getriebekomponente kann insbesondere unbeweglich feststehend oder langsamer als die Leistungswelle drehend ausgestaltet sein. Die Getriebekomponente kann insbesondere ein Hohlrad eines Planetengetriebes und/oder ein Getriebegehäuse sein. Vorzugsweise weist das Industriegetriebe ein Planetengetriebe mit einem feststehenden Hohlrad auf, das radial außen eine Außenhülle des Industriegetriebes ausbildet und an den Stirnseiten mit jeweils einem Teil eines feststehenden Getriebegehäuse verbunden ist. Vorzugsweise kann ein in Schwerkraftrichtung oberhalb der Getriebekomponente vorgesehenes Getriebegehäuse eine Abstützung für einen Antriebsmotor oder für einen von dem Industriegetriebe angetriebenen Drehteller einer Vertikalmühle ausbilden. Zwischen der Getriebekomponente und der relativ dazu drehbaren Leistungswelle kann insbesondere ein Lager, vorzugsweise mindestens ein Wälzlager, vorgesehen sein. Das Lager kann beispielsweise an der Getriebekomponente und der Leistungswelle oder der Getriebekomponente und einem anderen Bauteil des Industriegetriebes angreifen und diese drehbar zueinander lagern. Das Schmiermittel kann insbesondere zur Schmierung des Lagers vorgesehen sein und beispielsweise durch Schwerkrafteffekte von dem Lager zur ersten Dichtung gelangen. Das Schmiermittel kann zusätzlich oder alternativ zur Schmierung von Verzahnungseingriffen des Industriegetriebes vorgesehen sein und durch Verdrängung an Zahnflanken und/oder Schwerkrafteffekte zur ersten Dichtung gelangen.

Die berührungslose erste Dichtung besteht insbesondere ausschließlich aus nur dem einen einzelnen ersten Dichtspalt. Eine Kaskade von mehreren Dichtspalten, wie dies in einer berührungslosen Labyrinthdichtung vorgesehen wäre, kann bewusst vermieden werden. Mehrere zueinander beabstandete Lamellen, die jeweils einen zueinander versetzten Dichtspalt begrenzen, können vermieden werden. Die erste Dichtung kann sich in einem kegeligen ersten Dichtspalt erschöpfen. Der Herstellungsaufwand kann dadurch minimiert werden und/oder eine besonders robuste und wartungsarme Dichtung vorgesehen werden. Die erste Dichtung ist dadurch besonders einfach und kostengünstig mit besonders wenigen Bauteilen ausgestaltet. Insbesondere besteht die erste Dichtung aus genau zwei Bauteilen, die jeweils eine Seite des ersten Dichtspalts begrenzen.

Wenn bezüglich des Industriegetriebes und/oder der Dichtungsanordnung auf eine vertikale Richtung oder eine Schwerkraftrichtung abgestellt wird, bezieht sich dies auf die bestimmungsgemäße Einbaulage, bei der die Mittellinien beziehungsweise Drehachse der Getriebekomponente und der Leistungswelle in vertikaler Richtung, also entlang der Schwerkraftrichtung, ausgerichtet sind.

Insbesondere ist eine radial innere Mantelfläche des ersten Dichtspalts drehfest mit der Getriebekomponente und eine radial äußere Mantelfläche des ersten Dichtspalts drehfest mit der Leistungswelle befestigt. Die jeweilige Mantelfläche ist insbesondere konisch, also insbesondere als Außenkegelstumpf oder Innenkegelstumpf, ausgestaltet. Die jeweilige Mantelfläche kann eine Begrenzung des ersten Dichtspalts in radialer Richtung ausbilden. Vorzugsweise erstreckt sich die jeweilige Mantelfläche über die gesamte vertikale Erstreckung des ersten Dichtspalts, so dass eine Trennfuge innerhalb der jeweiligen Mantelfläche vermieden ist. Da die Getriebekomponente, insbesondere koaxial, radial außerhalb zur Leistungswelle vorgesehen ist und die mit der Getriebekomponente unmittelbar oder mittelbar befestigte Mantelfläche des ersten Dichtspalts an der radial inneren Begrenzung des ersten Dichtspalts vorgesehen ist, kann sich eine im Wesentlichen U-förmige Umgreifung der mit der Leistungswelle unmittelbar oder mittelbar befestigten, die radial äußere Begrenzung ausbildende Mantelfläche des ersten Dichtspalts ergeben. Dies bildet eine Schikane für den Massenstrom des leckenden Schmiermittels aus, so dass bereits eine Verringerung der Strömungsgeschwindigkeit des leckenden Schmiermittels erreicht ist, die ein Passieren des ersten Dichtspalts erschwert. Zudem kann hochspitzendes Schmiermittel leichter durch das die radial innere Mantelfläche insbesondere im Wesentlichen U-förmig umgreifende und mit der Leistungswelle verbundene Material der radial äußeren Mantelfläche zurückgehalten werden. Das die radial äußere Mantelfläche ausbildende Material kann einen Spritzschutz für den ersten Dichtspalt ausbilden.

Vorzugsweise ist die Getriebekomponente über ein einen Lagerspalt überbrückendes Lager relativ drehbar zur Leistungswelle gelagert, wobei der erste Dichtspalt mit dem Lagerspalt kommuniziert. Das für die Schmierung des Lagers, insbesondere Wälzlager, vorgesehene Schmiermittel, insbesondere Schmieröl, kann aus dem Lager verdrängt werden und, insbesondere schwerkraftgetrieben, zur ersten Dichtung gelangen. Beispielsweise kann das Lager einen Innenring und einen Außenring aufweisen, die um eine vertikal verlaufende Achse drehbar sind, wobei das im Lager vorgesehene Schmiermittel in Schwerkraftrichtung nach unten aus dem Lager austreten kann. Das Schmiermittel kann in einem Volumen zwischen dem Lagerspalt und dem ersten Dichtspalt zurückgehalten werden. Insbesondere kann zumindest ein Teil des Schmiermittels, das trotzdem in den ersten Dichtspalt gelangt ist, schwerkraftgetrieben und/oder fliehkraftgetrieben in dieses Volumen ohne externe Hilfsmittel, also passiv, zurückgeführt werden. Vorzugsweise ist mit dem zwischen dem Lagerspalt und dem ersten Dichtspalt vorgesehenen Volumen eine Ölrückführung zur aktiven und/oder passiven Abfuhr von Schmiermittel vorgesehen. Beispielsweise kann das Schmiermittel über die Ölrückführung zur Schmierung einer anderen Komponente des Industriegetriebes wiederverwendet werden. Da das aus dem Lager austretende Schmiermittel kaum über die erste berührungslose Dichtung durch den ersten Dichtspalt hindurch austreten kann, ist es möglich einen abdichtenden Lagerdeckel für das Lager einzusparen ohne eine signifikante Leckage befürchten zu müssen. Die Herstellungskosten sowie die Bauteileanzahl und der Wartungsaufwand können dadurch reduziert werden.

Besonders bevorzugt ist ein mit der Getriebekomponente verbundener ersten Dichtungsdeckel vorgesehen, wobei der erste Dichtungsdeckel zumindest einen Teil des ersten Dichtspalts radial innen begrenzt. Der erste Dichtungsdeckel kann einen Strömungspfad des Schmiermittels begrenzen und insbesondere an seiner zum ersten Dichtspalt weisenden Innenseite eine U-förmige Schikane für das Schmiermittel ausbilden. Der erste Dichtungsdeckel kann leicht durch eine axiale Relativbewegung relativ zu dem die radial äußere Begrenzung des ersten Dichtspalts ausbildenden Material montiert werden. Der erste Dichtungsdeckel kann insbesondere über in axialer Richtung, also insbesondere im Wesentlichen parallel zu einer Drehachse der Leistungswelle, verlaufende Befestigungsmittel, insbesondere Schrauben, mit der radial äußeren Getriebekomponente und/oder einem Getriebegehäuse verbunden werden. Eine Trennfuge des ersten Dichtungsdeckels zur Getriebekomponente und/oder zum Getriebegehäuse kann soweit nach radial außen versetzt und zu einem im Schwerkraftrichtung unteren Boden an der Innenseite des ersten Dichtungsdeckels beabstandet sein, dass das Schmiermittel nicht an die Trennfuge gelangen kann. Dadurch ist es sogar möglich ein Dichtelement in der Trennfuge einzusparen, wodurch die Bauteileanzahl reduziert ist. Alternativ kann sicherheitshalber ein kostengünstiges Dichtelement, beispielsweise ein O-Ring oder eine ringförmige Papierdichtung, in der Trennfuge vorgesehen sein.

Insbesondere weist der ersten Dichtungsdeckel ein in Schwerkraftrichtung unterhalb des ersten Dichtspalts vorgesehenes erstes Sammelvolumen zum Sammeln von Schmiermittel auf. Der erste Dichtungsdeckel kann an einem im Schwerkraftrichtung unteren Boden an der Innenseite des ersten Dichtungsdeckels das Sammelvolumen ausbilden. Vorzugsweise kann das Schmiermittel aus dem Sammelvolumen aktiv oder passiv abgeführt werden, so dass das Risiko, dass Schmiermittel aus dem Sammelvolumen in den ersten Dichtspalt der ersten berührungslosen Dichtung gelangt reduziert werden kann. Durch das Sammelvolumen kann das ankommende Schmiermittel zu dem ersten Dichtspalt in Schwerkraftrichtung beabstandet gesammelt werden, so dass auch hochspritzendes Schmiermittel kaum den ersten Dichtspalt erreichen kann. Es kann auch vorgesehen sein, dass zu sowieso vorgesehenen regelmäßigen Wartungszeitpunkten der erste Dichtungsdeckel zur Entnahme des seit der letzten Wartung gesammelten Schmiermittels aus dem Sammelvolumen demontiert wird. Zusätzlich oder alternativ kann auch vorgesehen sein, dass über eine mit dem Sammelvolumen kommunizierende verschließbare Ablauföffnung das seit der letzten Wartung gesammelte Schmiermittel entnommen werden kann.

Vorzugsweise weist die Leistungswelle einen hinterschnittenen ersten Kegelsitz zur radial äußeren Begrenzung des ersten Dichtspalts auf. Der erste Kegelsitz kann als separates Bauteil auf die Leistungswelle aufgesetzt sein oder einstückig mit der Leistungswelle ausgestaltet sein. Der erste Kegelsitz kann nach radial innen weisen und das die radial innere Begrenzung des ersten Dichtspalts ausbildende Material insbesondere im Wesentlichen U-förmig umgreifen. Der erste Kegelsitz kann beispielsweise durch ein spanabhebendes Bearbeitungsverfahren, insbesondere Drehen, in einer nach radial außen abstehenden Axialfläche der Leistungswelle kostengünstig erzeugt sein.

Besonders bevorzugt ist vorgesehen, dass der erste Dichtspalt mit einem zumindest zu einem Großteil in Schwerkraftrichtung nach unten verlaufenden ersten Überlaufkanal kommuniziert, wobei der erste Überlaufkanal in Schwerkraftrichtung unterhalb des ersten Dichtspalts endet. Falls Schmiermittel den ersten Dichtspalt der ersten berührungslosen Dichtung passieren sollte, kann dieser in der Regel sehr geringe Anteil des Schmiermittels über den Überlaufkanal von der ersten Dichtung weg abgeführt werden. Der Überlaufkanal kann insbesondere als Ringspalt zwischen der Leistungswelle und einem mit der Getriebekomponente verbundenen Bauteil, insbesondere der erste Dichtungsdeckel, ausgebildet sein.

Insbesondere ist zwischen dem ersten Dichtspalt und dem ersten Überlaufkanal eine erste Rampe zur Ausbildung eines größeren Strömungsquerschnitts als im ersten Dichtspalt ausgeformt. Beispielsweise kann die sich Steigung der radial inneren Begrenzung des ersten Dichtspalts mit Übergang in die Rampe sprungartig, beispielsweise über einen Knick, oder allmählich, beispielsweise über eine Rundung, ändern. Zwischen der radial äußeren Begrenzung des ersten Dichtspalts kann sich in Schwerkraftrichtung oberhalb der radial inneren Begrenzung des ersten Dichtspalts in einem gemeinsamen Höhenbereich mit der Rampe eine beispielsweise trichterartige Vergrößerung des Strömungsquerschnitts von unten nach oben ergeben. Eventuell vorhandene Kapillareffekte in dem ersten Dichtspalt können sich dadurch auflösen oder zumindest verringern, so dass ein durch Kapillareffekte verursachte Stofftransport des Schmiermittels durch den ersten Dichtspalt im Bereich der Rampe beendet werden kann. Die Rampe kann zur Horizontalen angeschrägt verlaufen, so dass auf der Rampe befindliches Schmiermittel schwerkraftgetrieben zurück in den ersten Dichtspalt fließen kann. Dadurch kann den ersten Dichtspalt passierendes Schmiermittel automatisch zurückfließen, wodurch eine Leckage vermieden oder zumindest reduziert werden kann.

Vorzugsweise ist mit der Leistungswelle ein Zwischenstück drehfest verbunden, wobei das Zwischenstück eine zum ersten Überlaufkanal weisende Stirnseite zum schwerkraftgetriebene und/oder fliehkraftgetriebenen Abführen von aus dem ersten Überlaufkanal kommenden Schmiermittel nach radial außen aufweist. Das über den Überlaufkanal nach unten abtropfende Schmiermittel kann am unteren Ende des Überlaufkanals an der Stirnseite des Zwischenstücks auftreffen. Da das Zwischenstück mit der Leistungswelle drehfest verbunden ist, kann die Stirnseite des Zwischenstücks als Schleuderscheibe wirken und das Schmiermittel fliehkraftgetrieben nach radial außen von der Leistungswelle weg bewegen. Ein Stofftransport des Schmiermittels an einer Trennfuge zwischen dem Zwischenstück und der Leistungswelle, der schließlich zu einer Leckage führen könnte, ist dadurch vermieden. Die Stirnseite des Zwischenstücks kann insbesondere von radial innen nach radial außen zur Horizontalen nach unten angeschrägt verlaufen, so dass selbst bei einer stillstehenden Leistungswelle und fehlenden Fliehkräften das an der Stirnseite ankommende Schmiermittel schwerkraftgetrieben nach radial außen über die Stirnseite fließen kann. Das Schmiermittel kann beispielsweise an dem radial äußeren Ende der Stirnseite aufgefangen und/oder angeführt werden, um eine Leckage zu vermeiden.

Besonders bevorzugt weist die Leistungswelle eine einen Axialanschlag für das Zwischenstück ausbildende Stufe auf, wobei eine radiale Innenseite des Zwischenstücks radial weiter innen als der erste Überlaufkanal vorgesehen ist. Durch den zumindest geringfügigen radialen Versatz der Innenseite des Zwischenstücks zu dem radial inneren Rand des Überlaufkanals kann sichergestellt werden, dass an der Stirnseite des Zwischenstücks ankommendes Schmiermittel nach radial außen weggefördert wird, wo der Strömungswiderstand erheblich geringer als an der Trennfuge zwischen dem Zwischenstück und der Leistungswelle ist. Zudem kann die den Axialanschlag ausbildende Stufe die axiale Relativlage des Zwischenstücks zur Leistungswelle vorgeben. Vorzugsweise ist das Zwischenstück auf der Leistungswelle drehfest aufgepresst und hierzu bis zu einem Anschlagen an dem Axialanschlag der Stufe auf die Leistungswelle aufgeschoben.

Insbesondere ist in Schwerkraftrichtung unterhalb der ersten Dichtung zwischen der Getriebekomponente und der Leistungswelle eine berührungslose zweite Dichtung zur Bereitstellung eines Dichtwiderstands gegen die erste Dichtung passierendes Schmiermittel vorgesehen, wobei insbesondere die zweite Dichtung einen zur Schwerkraftrichtung angeschrägten und entgegen der Schwerkraftrichtung von radial außen nach radial innen verlaufenden konischen zweiten Dichtspalt aufweist. Die berührungslose zweite Dichtung kann sich insbesondere in Strömungsrichtung des Schmiermittels an die erste Dichtung, den nachfolgenden Überlaufkanal und die nachfolgende Stirnseite des Zwischenstücks anschließen. Die berührungslose zweite Dichtung kann insbesondere analog zu der wie vorstehend beschriebenen ersten Dichtung ausgestaltet sein. Die vorstehende Erläuterung der ersten Dichtung gilt analog für die zweite Dichtung. Die Dichtungsanordnung kann dadurch insbesondere im Wesentlichen zweistufig mit zwei berührungslosen Dichtungen, die jeweils einen kegeligen Dichtspalt aufweisen, der nur entgegen der Schwerkraftrichtung von dem Schmiermittel passiert werden kann.

Vorzugsweise ist vorgesehen, dass eine radial innere Mantelfläche des zweiten Dichtspalts drehfest mit der Getriebekomponente und eine radial äußere Mantelfläche des zweiten Dichtspalts drehfest mit der Leistungswelle befestigt ist und/oder ein mit der Getriebekomponente unmittelbar oder mittelbar verbundener zweiter Dichtungsdeckel vorgesehen ist, wobei der zweite Dichtungsdeckel zumindest einen Teil des zweiten Dichtspalts radial innen begrenzt und/oder der zweite Dichtungsdeckel ein in Schwerkraftrichtung unterhalb des zweiten Dichtspalts vorgesehenes zweites Sammelvolumen zum Sammeln und/oder Abführen von Schmiermittel aufweist und/oder das Zwischenstück einen zweiten hinterschnittenen Kegelsitz zur radial äußeren Begrenzung des zweiten Dichtspalts aufweist und/oder der zweite Dichtspalt mit einem zumindest zu einem Großteil in Schwerkraftrichtung nach unten verlaufenden zweiten Überlaufkanal kommuniziert und/oder zwischen dem zweiten Dichtspalt und dem zweiten Überlaufkanal eine zweite Rampe zur Ausbildung eines größeren Strömungsquerschnitts als im zweiten Dichtspalt ausgeformt ist. Die zweite Dichtung kann dadurch in Teilen oder vollständig analog zu der ersten Dichtung ausgestaltet sein, mit der Maßgabe, dass die zweite Dichtung in Schwerkraftrichtung unterhalb der ersten Dichtung angeordnet ist und die radial äußere Begrenzung des zweiten Dichtspalts nicht durch die Leistungswelle selbst, sondern durch das mit der Leistungswelle verbundene Zwischenstück ausgebildet ist. Zudem ist es möglich die zweite Dichtung auf einem im Vergleich zur ersten Dichtung geringeren Nenn-Durchmesser vorzusehen. Zudem kann der zweite Dichtungsdeckel mit dem ersten Dichtungsdeckel befestigt sein, so dass der zweite Dichtungsdeckel nur mittelbar mit der Getriebekomponente und/oder dem Getriebegehäuse verbunden ist.

Besonders bevorzug ist in Schwerkraftrichtung unterhalb der zweiten Dichtung eine mit dem zweiten Dichtspalt kommunizierende Enddichtung, insbesondere Labyrinthdichtung oder berührende Dichtung, vorgesehen, wobei die Enddichtung auf einem geringeren Radius als der erste Dichtspalt und der zweite Dichtspalt vorgesehen ist. Die Labyrinthdichtung ist insbesondere gefettet. Die Enddichtung kann an einem unteren Abschluss des Getriebegehäuses vorgesehen sein. Die Enddichtung ist dadurch im Vergleich zu der ersten Dichtung und der zweiten Dichtung leichter zugänglich und kann erforderlichenfalls leichter und schneller gewartet werden.

Ein Aspekt betrifft ferner ein Industriegetriebe, insbesondere zum Antrieb einer Vertikalmühle, mit einer vertikal ausgerichteten Leistungswelle zum Einleiten eines Drehmoments, wobei die Leistungswelle eine Planetenträgerwelle oder Sonnenwelle eines Planetengetriebes ist, und einer im Vergleich zur Leistungswelle im bestimmungsgemäßen Gebrauch langsamer drehenden oder stillstehenden Getriebekomponente, wobei die Getriebekomponente als Hohlrad und/oder Getriebegehäuse des Planetengetriebes ausgebildet ist, und einer Dichtungsanordnung, die wie vorstehend beschrieben aus- und weitergebildet sein kann, zum Zurückhalten von Schmiermittel. Selbst wenn Schmiermittel entgegen der Schwerkraft in den ersten Dichtspalt der ersten Dichtung gelangt, kann die einfache aber effektive Formgestaltung des ersten Dichtspalts das Schmiermittel ohne Verschleißeffekte zurück nach unten fördern, so dass mit Hilfe der Dichtungsanordnung eine wartungsarmes und kostengünstiges Industriegetriebe ermöglicht ist. Das Industriegetriebe kann insbesondere im Übrigen wie in DE 10 2013 212 464 A1 beschreiben aus- und weitergebildet sein, vorzugsweise um eine Vertikalmühle, beispielsweise zum Zerkleinern von Feststoffen, auszubilden.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Dichtungsanordnung, die wie vorstehend beschrieben aus- und weitergebildet sein kann oder dem Industriegetriebe, das wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung eine additive Herstellung der Bestandteile der Dichtungsanordnung, die wie vorstehend beschrieben aus- und weitergebildet sein kann, oder dem Industriegetriebe, das wie vorstehend beschrieben aus- und weitergebildet sein kann, insbesondere durch 3D-Druck, und/oder eine Simulation der Funktionsweise der Dichtungsanordnung, die wie vorstehend beschrieben aus- und weitergebildet sein kann, oder dem Industriegetriebe, das die wie vorstehend beschrieben aus- und weitergebildet sein kann, durchzuführen. Das Datenagglomerat kann in der Art eines sogenannten "digital twin" eine virtuelle Verkörperung der jeweiligen Vorrichtung, insbesondere der Dichtungsanordnung und/oder des Industriegetriebes, darstellen, die eine virtuelle Untersuchung in Form einer Simulation oder eine reale Vergegenständlichung mit Hilfe eines additiven Fertigungsverfahrens ermöglicht. Hierbei kann insbesondere jeweils ein Datenpaket einen separat ausgeführten Bestandteil der jeweiligen zugeordneten Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Dies ermöglicht eine kostengünstige Herstellung von Prototypen und/oder computerbasierten Simulationen, um die Funktionsweise der Dichtungsanordnung und/oder des Industriegetriebes zu studieren, Probleme im konkreten Anwendungsfall zu identifizieren und Verbesserungen zu finden. Selbst wenn Schmiermittel entgegen der Schwerkraft in den ersten Dichtspalt der ersten Dichtung gelangt, kann die einfache aber effektive Formgestaltung des ersten Dichtspalts das Schmiermittel ohne Verschleißeffekte zurück nach unten fördern, so dass mit Hilfe der Dichtungsanordnung eine wartungsarmes und kostengünstiges Industriegetriebe ermöglicht ist, was mit Hilfe des Datenagglomerats leicht und kostengünstig überprüft werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: einen unteren Teil einer Industriegetriebes,
Fig. 2: eine für das Industriegetriebe aus Fig. 1 vorgesehene Dichtungsanordnung.

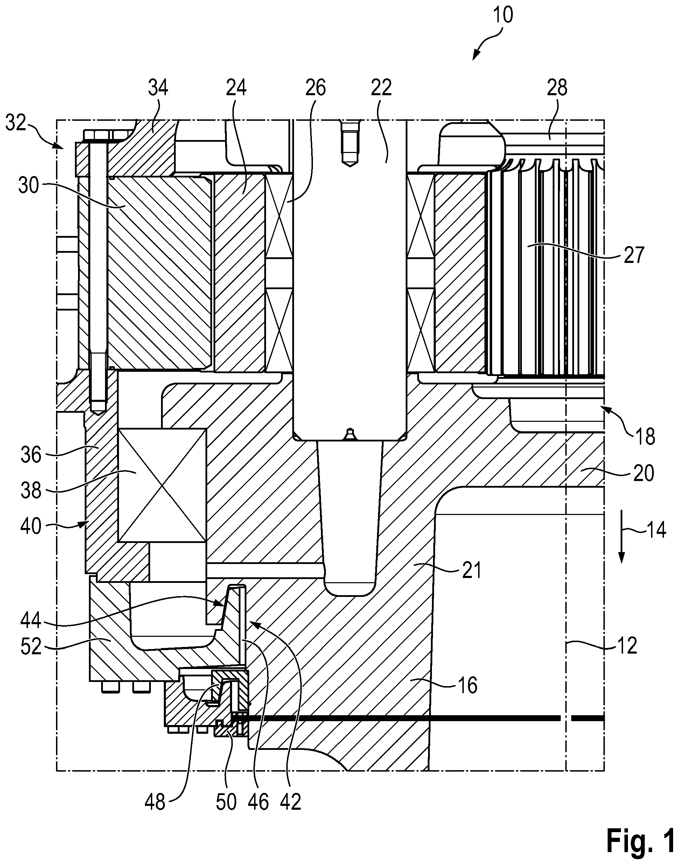

Das in Fig. 1 teilweise dargestellte Industriegetriebe 10 kann insbesondere für eine Vertikalmühle zum Zerkleinern von Feststoffen verwendet werden. Das Industriegetriebe 10 ist im bestimmungsgemäßen Gebrauch im Wesentlichen vertikal ausgerichtet, so dass eine Hauptdrehachse 12 in entlang einer Schwerkraftrichtung 14 ausgerichtet ist. Am in Schwerkraftrichtung 14 unteren Ende des Industriegetriebes 10 kann eine als Abtriebswelle verwendete Leistungswelle 16 ein in dem Industriegetriebe 10 gewandeltes Drehmoment aus dem Industriegetriebe 10 ausleiten. Das Industriegetriebe 10 weist mindestens ein Planetengetriebe 18 auf, wobei vorzugsweise zwei oder mehr Planetenstufen vorgesehen sein können. Das eine letzte Planetenstufe ausbildende Planetengetriebe 18 weist einen Planetenträger 20 auf, der insbesondere einstückig mit einer Planetenträgerwelle 21 verbunden ist, die im dargestellten Ausführungsbeispiel gleichzeitig die Leistungswelle 16 ausbildet. Der Planetenträger 20 weist mindestens eine drehfest mit dem Planetenträger 20 befestigte Planetenradachse 22 auf, an der ein Planetenrad 24 relativ drehbar über ein Gleitlager oder Wälzlager ausgestaltetes Planetenradlager 26 gelagert ist. Alternativ kann das Planetenrad 24 eine mit dem Planetenrad 24 mitdrehende Planetenradwelle aufweisen, die innerhalb einer Wange des Planetenträgers 20 gelagert sein kann. Insbesondere sind mindestens drei, vorzugsweise vier, fünf, sechs oder sieben, Planetenräder 24 vorgesehen. Das jeweilige Planetenrad 24 kämmt radial innen mit einem Sonnenrad 27, das mit einer Sonnenradwelle 28 drehfest verbunden ist. Im dargestellten Ausführungsbeispiel wird über die Sonnenradwelle 28 eine von einem Antriebsmotor kommende Antriebsleistung, die gegebenenfalls bereits durch mindestens eine vorgeschaltete Planetenstufe des Industriegetriebes 10 drehzal- und drehmomentgewandelt ist, über das Planetengetriebe 18 an die Leistungswelle 16 übertragen. Die Leistungswelle 16 kann als Abtriebswelle die gewandelte Antriebsleistung direkt oder indirekt an eine Mühlenwelle der Vertikalmühle ausleiten, um einen Mühlteller in Rotation zu versetzten. Radial außen kämmt das jeweilige Planetenrad 24 mit einem Hohlrad 30, das im Vergleich zu der Leistungswelle 16 langsamer läuft. Im dargestellten Ausführungsbeispiel ist das Hohlrad 30 sogar unbeweglich festgehalten und kann an seiner Außenseite eine Außenhülle eines Getriebegehäuses 32 ausbilden, aus der die Leistungswelle 16 herausragt. Im dargestellten Ausführungsbeispiel kann das Getriebegehäuse 32 durch das Hohlrad 30 sowie einem oberen Gehäuseteil 34 und einem unteren Gehäuseteil 36 zusammengesetzt sein. Das obere Gehäuseteil 34 kann an einer nach oben weisenden Stirnseite des Hohlrads 30 befestigt, insbesondere verschraubt sein, wobei das obere Gehäuseteil 34 insbesondere eine Auflagerfläche zur Abstützung eines Antriebsmotors der Vertikalmühle aufweisen kann. Das untere Gehäuseteil 36 kann an einer nach unten weisenden Stirnseite des Hohlrads 30 befestigt, insbesondere verschraubt sein, wobei das untere Gehäuseteil 36 und damit auch das Hohlrad 30 über ein, insbesondere als Wälzlager ausgestaltetes, Lager 38 an der Leistungswelle 16 gelagert ist. Das Hohlrad 30 und das untere Gehäuseteil 36 bilden eine Getriebekomponente 40 des Industriegetriebes 10 aus, die radial außerhalb zu der Leistungswelle 16 vorgesehen ist.

Das Lager 38 kann mit einem Schmiermittel, insbesondere Schmieröl, geschmiert sein, wobei es möglich ist, dass Schmiermittel aus dem Lager 38 verdrängt wird und in Schwerkraftrichtung 14 nach unten abtropfen kann. Damit eine Leckage vermieden wird, sind die Getriebekomponente 40 und die Leistungswelle 16 Teil einer Dichtungsanordnung 42, die eine berührungslose erste Dichtung 44 und eine über einen ersten Überlaufkanal 46 kommunizierende berührungslose zweite Dichtung 48 aufweist, an der sich schließlich über einen zweiten Überlaufkanal 80 eine auf einem geringeren Radius vorgesehene Enddichtung 50 anschließt.

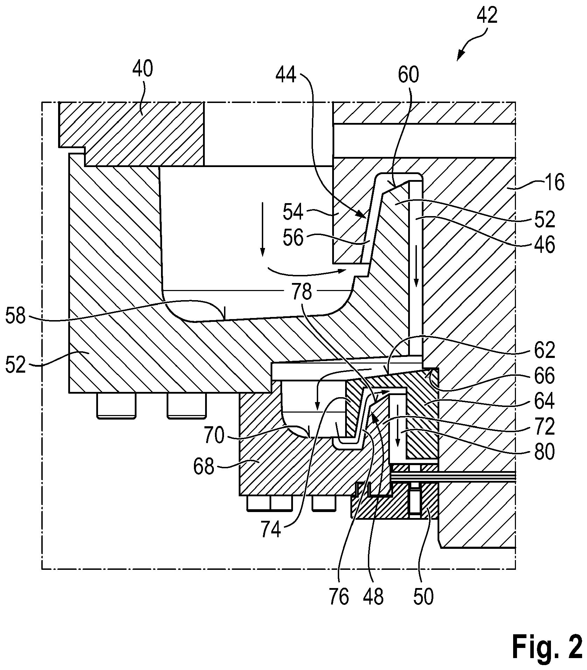

Wie in Fig. 2 im Detail dargestellt ist, weist die Dichtungsanordnung 42 einen ersten Dichtungsdeckel 52, der durch eine axiale Relativbewegung mit einem abstehenden ersten Fortsatz 52 in einen von der Leistungswelle 16 ausgebildeten Hinterschnitt eingreifen kann, wobei der Hinterschnitt einen ersten hinterschnittenen Kegelsitz 54 ausbildet. Zwischen dem ersten Kegelsitz 54 und dem ersten Fortsatz 52 ist ein kegeliger erster Dichtspalt 56 der ersten Dichtung 44 ausgebildet, der sich entgegen der Schwerkraftrichtung 14 und von radial außen nach radial innen erstreckt. Der erste Dichtungsdeckel 52 kann mit einer unteren Stirnseite der Getriebekomponente 40 befestigt sein und ein erstes Sammelvolumen 58 begrenzen, in welches das von dem Lager 38 kommende Schmiermittel abtropfen kann. Für eine Leckage des Schmiermittels wäre es erforderlich, dass das Schmiermittel von dem ersten Sammelvolumen 58 entgegen der Schwerkraftrichtung 14 den ersten Dichtspalt 56 der ersten Dichtung 44 passiert. Zudem kann der die radial äußere Mantelfläche des ersten Dichtspalts 56 ausbildende erste Kegelsitz 54 mit der Drehzahl des Leistungswelle 16 drehen und auf das in den ersten Dichtspalt 56 gelangte Schmiermittel eine Fliehkraft aufprägen, aufgrund dessen das Schmiermittel nach radial außen und an dem erste Kegelsitz 54 entlang nach radial außen zurück in das erste Sammelvolumen 58 gefördert wird. Am oberen Ende des ersten Dichtspalts 56 schließt sich eine erste Rampe 60 an, die zu einem größeren Strömungsquerschnitt als im ersten Dichtspalt 56 führt. Den ersten Dichtspalt 56 passierendes Schmiermittel kann sich an der ersten Rampe 60 absetzen und schwerkraftgetrieben zurück in den ersten Dichtspalt 56 fließen.

Selbst wenn Schmiermittel die erste Dichtung 44 passieren sollte, kann das Schmiermittel über den ersten Überlaufkanal 46 an einer nach oben weisenden Stirnseite 62 eines drehfest mit der Leistungswelle 16 befestigten Zwischenstücks 64 gelangen. Das Zwischenstück 64 ist auf einen geringeren Durchmesser als der erste Überlaufkanal 46 auf die Leistungswelle 16 bis zu einer Stufe 66 aufgepresst. Die Stirnseite 62 des Zwischenstücks 64 ist zur Horizontalen angeschrägt, so dass das ankommende Schmiermittel schwerkraftgetrieben über die Stirnseite 62 nach radial außen fließen kann. Zudem kann das Zwischenstück 64 mit der Drehzahl der Leistungswelle 16 rotieren und die Bewegung des Schmiermittels nach radial außen durch aufgeprägte Fliehkräfte unterstützen. Das Schmiermittel kann von der Stirnseite 62 des Zwischenstücks 64 in ein von einem zweiten Dichtungsdeckel 68 begrenztes zweites Sammelvolumen 70 gelangen. Der zweite Dichtungsdeckel 68 kann durch eine axiale Relativbewegung mit einem abstehenden zweiten Fortsatz 72 in einen von dem Zwischenstück 64 ausgebildeten Hinterschnitt eingreifen kann, wobei der Hinterschnitt einen zweiten hinterschnittenen Kegelsitz 74 ausbildet. Zwischen dem zweiten Kegelsitz 74 und dem zweiten Fortsatz 72 ist ein kegeliger zweiter Dichtspalt 76 der zweiten Dichtung 48 ausgebildet, der sich entgegen der Schwerkraftrichtung 14 und von radial außen nach radial innen erstreckt. Der zweite Dichtungsdeckel 68 kann mit einer unteren Stirnseite der Getriebekomponente 40 und/oder mit einer unteren Stirnseite des ersten Dichtungsdeckel 52 befestigt sein. Für eine Leckage des Schmiermittels wäre es erforderlich, dass das Schmiermittel von dem zweiten Sammelvolumen 70 entgegen der Schwerkraftrichtung 14 den zweiten Dichtspalt 76 der zweiten Dichtung 48 passiert. Zudem kann der die radial äußere Mantelfläche des zweiten Dichtspalts 76 ausbildende zweite Kegelsitz 74 mit der Drehzahl des Leistungswelle 16 drehen und auf das in den zweiten Dichtspalt 76 gelangte Schmiermittel eine Fliehkraft aufprägen, aufgrund dessen das Schmiermittel nach radial außen und an dem zweiten Kegelsitz 74 entlang nach radial außen zurück in das zweite Sammelvolumen 70 gefördert wird. Am oberen Ende des zweiten Dichtspalts 76 schließt sich eine zweite Rampe 78 an, die zu einem größeren Strömungsquerschnitt als im zweiten Dichtspalt 76 führt. Den zweiten Dichtspalt 76 passierendes Schmiermittel kann sich an der zweiten Rampe 78 absetzen und schwerkraftgetrieben zurück in den zweiten Dichtspalt 76 fließen. Selbst wenn das Schmiermittel auch die berührungslose zweite Dichtung 48 passieren sollte und über einen zweiten Überlaufkanal 80 zur Enddichtung 50 gelenkt, kann die beispielsweise als gefettete Labyrinthdichtung ausgestaltete Enddichtung 50 eine Leckage des Schmiermittels verhindern. Insbesondere ist die Enddichtung 50 lediglich als Staubdichtung ausgestaltet, die ein Eindringen von Staub in das Industriegetriebe 10 verhindern soll. Da an der Enddichtung 50, sofern überhaupt, nur sehr wenig Schmiermittel ankommt, ist eine geringe Dichtwirkung der Enddichtung gegen eine Leckage von Schmiermittel bereits ausreichend.

## Patentansprüche

1. Dichtungsanordnung (42) für ein Industriegetriebe (10), mit
einer vertikal ausgerichteten unteren Leistungswelle (16) zum Drehmomentaustausch mit dem Industriegetriebe (10),
einer radial außerhalb zu der Leistungswelle (16) vorgesehenen Getriebekomponente (40) des Industriegetriebes (10), wobei die Leistungswelle (16) im bestimmungsgemäßen Betrieb eine größere Drehzahl als die Getriebekomponente (40) aufweist,
wobei zwischen der Getriebekomponente (40) und der Leistungswelle (16) eine berührungslose erste Dichtung (44) vorgesehen ist,
wobei die erste Dichtung (44) einen zur Schwerkraftrichtung (14) angeschrägten und entgegen der Schwerkraftrichtung (14) von radial außen nach radial innen verlaufenden konischen ersten Dichtspalt (56) aufweist.

2. Dichtungsanordnung (42) nach Anspruch 1 **dadurch gekennzeichnet, dass** eine radial innere Mantelfläche des ersten Dichtspalts (56) drehfest mit der Getriebekomponente (40) und eine radial äußere Mantelfläche des ersten Dichtspalts (56) drehfest mit der Leistungswelle (16) befestigt ist.

3. Dichtungsanordnung (42) nach Anspruch 1 oder 2 **dadurch gekennzeichnet, dass** die Getriebekomponente (40) über ein einen Lagerspalt überbrückendes Lager (38) relativ drehbar zur Leistungswelle (16) gelagert ist, wobei der erste Dichtspalt (56) mit dem Lagerspalt kommuniziert.

4. Dichtungsanordnung (42) nach einem der Ansprüche 1 bis 3 **dadurch gekennzeichnet, dass** ein mit der Getriebekomponente (40) verbundener ersten Dichtungsdeckel (52) vorgesehen ist, wobei der erste Dichtungsdeckel (52) zumindest einen Teil des ersten Dichtspalts (56) radial innen begrenzt.

5. Dichtungsanordnung (42) nach Anspruch 4 **dadurch gekennzeichnet, dass** der ersten Dichtungsdeckel (52) ein in Schwerkraftrichtung (14) unterhalb des ersten Dichtspalts (56) vorgesehenes erstes Sammelvolumen (58) zum Sammeln von Schmiermittel aufweist.

6. Dichtungsanordnung (42) nach einem der Ansprüche 1 bis 5 **dadurch gekennzeichnet, dass** die Leistungswelle (16) einen hinterschnittenen ersten Kegelsitz (54) zur radial äußeren Begrenzung des ersten Dichtspalts (56) aufweist.

7. Dichtungsanordnung (42) nach einem der Ansprüche 1 bis 6 **dadurch gekennzeichnet, dass** der erste Dichtspalt (56) mit einem zumindest zu einem Großteil in Schwerkraftrichtung (14) nach unten verlaufenden ersten Überlaufkanal (46) kommuniziert, wobei der erste Überlaufkanal (46) in Schwerkraftrichtung (14) unterhalb des ersten Dichtspalts (56) endet.

8. Dichtungsanordnung (42) nach Anspruch 7 **dadurch gekennzeichnet, dass** zwischen dem ersten Dichtspalt (56) und dem ersten Überlaufkanal (46) eine erste Rampe (60) zur Ausbildung eines größeren Strömungsquerschnitts als im ersten Dichtspalt (56) ausgeformt ist.

9. Dichtungsanordnung (42) nach Anspruch 7 oder 8 **dadurch gekennzeichnet, dass** mit der Leistungswelle (16) ein Zwischenstück (64) drehfest verbunden ist, wobei das Zwischenstück (64) eine zum ersten Überlaufkanal (46) weisende Stirnseite (62) zum schwerkraftgetriebene und/oder fliehkraftgetriebenen Abführen von aus dem ersten Überlaufkanal (46) kommenden Schmiermittel nach radial außen aufweist.

10. Dichtungsanordnung (42) nach Anspruch 9 **dadurch gekennzeichnet, dass** die Leistungswelle (16) eine einen Axialanschlag für das Zwischenstück (64) ausbildende Stufe (66) aufweist, wobei eine radiale Innenseite des Zwischenstücks (64) radial weiter innen als der erste Überlaufkanal (46) vorgesehen ist.

11. Dichtungsanordnung (42) nach einem der Ansprüche 1 bis 10 **dadurch gekennzeichnet, dass** in Schwerkraftrichtung (14) unterhalb der ersten Dichtung (44) zwischen der Getriebekomponente (40) und der Leistungswelle (16) eine berührungslose zweite Dichtung (48) zur Bereitstellung eines Dichtwiderstands gegen die erste Dichtung (44) passierendes Schmiermittel vorgesehen ist, wobei die zweite Dichtung (48) einen zur Schwerkraftrichtung (14) angeschrägten und entgegen der Schwerkraftrichtung (14) von radial außen nach radial innen verlaufenden konischen zweiten Dichtspalt (76) aufweist.

12. Dichtungsanordnung (42) nach Anspruch 11 **dadurch gekennzeichnet, dass** eine radial innere Mantelfläche des zweiten Dichtspalts (76) drehfest mit der Getriebekomponente (40) und eine radial äußere Mantelfläche des zweiten Dichtspalts (76) drehfest mit der Leistungswelle (16) befestigt ist und/oder ein mit der Getriebekomponente (40) unmittelbar oder mittelbar verbundener zweiter Dichtungsdeckel (68) vorgesehen ist, wobei der zweite Dichtungsdeckel (68) zumindest einen Teil des zweiten Dichtspalts (76) radial innen begrenzt und/oder der zweite Dichtungsdeckel (76) ein in Schwerkraftrichtung (14) unterhalb des zweiten Dichtspalts (76) vorgesehenes zweites Sammelvolumen (70) zum Sammeln und/oder Abführen von Schmiermittel aufweist und/oder das Zwischenstück (64) einen zweiten hinterschnittenen Kegelsitz (74) zur radial äußeren Begrenzung des zweiten Dichtspalts (76) aufweist und/oder der zweite Dichtspalt (76) mit einem zumindest zu einem Großteil in Schwerkraftrichtung (14) nach unten verlaufenden zweiten Überlaufkanal (80) kommuniziert und/oder
zwischen dem zweiten Dichtspalt (76) und dem zweiten Überlaufkanal (80) eine zweite Rampe (78) zur Ausbildung eines größeren Strömungsquerschnitts als im zweiten Dichtspalt (76) ausgeformt ist.

13. Dichtungsanordnung (42) nach Anspruch 11 oder 12 **dadurch gekennzeichnet, dass** in Schwerkraftrichtung (14) unterhalb der zweiten Dichtung (48) eine mit dem zweiten Dichtspalt (76) kommunizierende Enddichtung (50), insbesondere Labyrinthdichtung oder berührende Dichtung, vorgesehen ist, wobei die Enddichtung (50) auf einem geringeren Radius als der erste Dichtspalt (56) und der zweite Dichtspalt (76) vorgesehen ist.

14. Industriegetriebe (10), insbesondere zum Antrieb einer Vertikalmühle, mit einer vertikal ausgerichteten Leistungswelle (16) zum Einleiten eines Drehmoments, wobei die Leistungswelle (16) eine Planetenträgerwelle (21) oder Sonnenwelle (28) eines Planetengetriebes (18) ist, und einer im Vergleich zur Leistungswelle (16) im bestimmungsgemäßen Gebrauch langsamer drehenden oder stillstehenden Getriebekomponente (40), wobei die Getriebekomponente (40) als Hohlrad (30) und/oder Getriebegehäuse (32) des Planetengetriebes (18) ausgebildet ist, und einer Dichtungsanordnung (42) nach einem der Ansprüche 1 bis 13 zum Zurückhalten von Schmiermittel.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Dichtungsanordnung (42) nach einem der Ansprüche 1 bis 13 oder dem Industriegetriebe (10) nach Anspruch 14 vorgesehenen Bestandteile, wobei die Datenpakete dazu hergerichtet sind bei einer Verarbeitung durch eine Datenverarbeitungseinrichtung eine additive Herstellung der Bestandteile der Dichtungsanordnung (42) nach einem der Ansprüche 1 bis 13 oder dem Industriegetriebe (10) nach Anspruch 14, insbesondere durch 3D-Druck, und/oder eine Simulation der Funktionsweise der Dichtungsanordnung (42) nach einem der Ansprüche 1 bis 13 oder dem Industriegetriebe (10) nach Anspruch 14 durchzuführen.
